# FASCICULE DE BREVET EUROPEEN

(11) **EP 0 445 020 B1**
(45) Date de publication et mention de la délivrance du brevet: **25.05.1994**
(21) Numéro de dépôt: 91400514.5
(22) Date de dépôt: 26.02.1991
(51) Int. Cl.: F16K 27/08

(54) **Robinet-vanne**
Schieberventil
Sliding valve

(30) Priorité: 27.02.1990 FR 9002438
(43) Date de publication de la demande: 04.09.1991
(73) Titulaire: SOCIETE NOUVELLE GENERALE D'HYDRAULIQUE ET DE MECANIQUE G.H.M., F-52130 Wassy (FR)
(72) Inventeur: Munier, Michel, F-52100 - Saint Dizier (FR)
(74) Mandataire: Hoisnard, Jean-Claude

(56) Documents cités:
- EP-A- 0 198 109
- EP-A- 0 314 823
- FR-A- 738 677
- FR-A- 750 178
- US-A- 2 541 968
- US-A- 2 610 820
- US-A- 2 660 191

## Description

Selon la technique connue, l'opercule d'un robinet-vanne peut passer de sa position d'obturation à sa position d'ouverture en étant remonté au moyen d'un système à écrou et vis sans fin à l'intérieur d'une cheminée verticale. Cette cheminée est obturée à sa partie supérieure par un couvercle, qui est par ailleurs traversé par la vis sans fin de réglage de la position de l'opercule.

Le mode de fixation le plus courant du couvercle sur le corps de vanne est constitué à ce jour par une bride, que comporte le couvercle, et qui est assujettie au corps de vanne par une série de vis ou de boulons.

Il a déjà été estimé que ces vis ou ces boulons de fixation pouvaient présenter l'inconvénient d'être sensibles à la corrosion, notamment en ce qui concerne les robinets-vannes enterrées, et il a déjà été envisagé de supprimer cette fixation usuelle par boulons par d'autres dispositifs de fixation.

FR-A-2 492 938 décrit une telle disposition, dans laquelle la fixation du couvercle est réalisée en adoptant, à la partie supérieure de la cheminée du corps de vanne, un rétrécissement de la section elliptique de la partie cylindrique de ce corps de vanne susceptible d'abriter l'opercule en position d'ouverture.

Par ailleurs, les dispositifs connus à ce jour ne présentent pas toujours l'efficacité souhaitée en ce qui concerne la fixation elle-même du couvercle sur le corps de vanne.

Le rétrécissement de la section de la partie cylindrique et l'absence éventuelle d'efficacité des dispositions connues constituent des inconvénients auxquels l'invention a pour but de remédier.

L'invention est relative à un robinet-vanne, tel que décrit dans EP-A-0 198 109, dont la constitution est conforme au préambule de la revendication 1.

Selon l'invention, les dispositions de la partie caractérisante de la revendication 1 sont adoptées.

Les avantageuses dispositions suivantes sont en outre, de préférence, également adoptées :
- la distance radiale entre l'axe du couvercle et la périphérie externe d'un appendice est inférieure à la distance radiale entre l'axe central de la face interne de la paroi du corps de vanne définissant ladite ouverture et ladite face interne, afin de permettre l'introduction de présentation des appendices en regard des ouvertures desdites alvéoles borgnes ;
- un joint d'étanchéité est disposé entre l'une des faces de la bride et un épaulement, dont est muni le couvercle ;
- ledit joint d'étanchéité est disposé entre la face de la bride qui est celle des deux faces de la bride qui est la plus éloignée du presse-étoupe et l'épaulement du couvercle, qui est orienté vers ledit presse-étoupe ;
- la partie externe du couvercle comprend un alésage taraudé qui coopère avec un filetage externe du presse-étoupe pour la fixation dudit presse-étoupe, des joints d'étanchéité du presse-étoupe étant disposés entre la partie extrême de la tige filetée et le presse-étoupe, et, entre le presse-étoupe et ledit couvercle, respectivement ;
- des joints d'étanchéité sont disposés, d'une part, entre la plaque supérieure et le couvercle, d'autre part, entre la plaque supérieure et la face transversale externe du corps de vanne ;
- les alvéoles borgnes s'étendent radialement vers l'extérieur du corps de vanne, les parois les délimitant ne chevauchant pas la face intérieure sensiblement cylindrique, à section constante, de la paroi délimitant la chambre, de sorte que l'ouverture de cette chambre ne provoque aucun rétrécissement de la section de ladite chambre ;
- les alvéoles borgnes sont réalisées dans des excroissances de la paroi délimitant la chambre, excroissances qui s'étendent radialement vers l'extérieur du corps de vanne ;

L'un des avantages de l'invention est de proposer une disposition simple et efficace pour la fixation du couvercle sur le corps de vanne, qui n'a pas recours aux nombreuses vis et boulons antérieurement utilisés. Cet avantage est complété par l'absence de rétrécissement de la section de la partie cylindrique qu'il est possible d'obtenir et par la possibilité supplémentaire de monter et de démonter le couvercle et les autres pièces sans intervenir sur la fixation du corps de vanne sur la conduite sur laquelle il est monté.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est une coupe axiale d'un robinet-vanne conforme à l'invention, entièrement monté, dans la configuration d 'obturation ;
- la figure 2 est une coupe axiale analogue à celle de la figure 1, du même robinet-vanne, dans la configuration de non-obturation ;

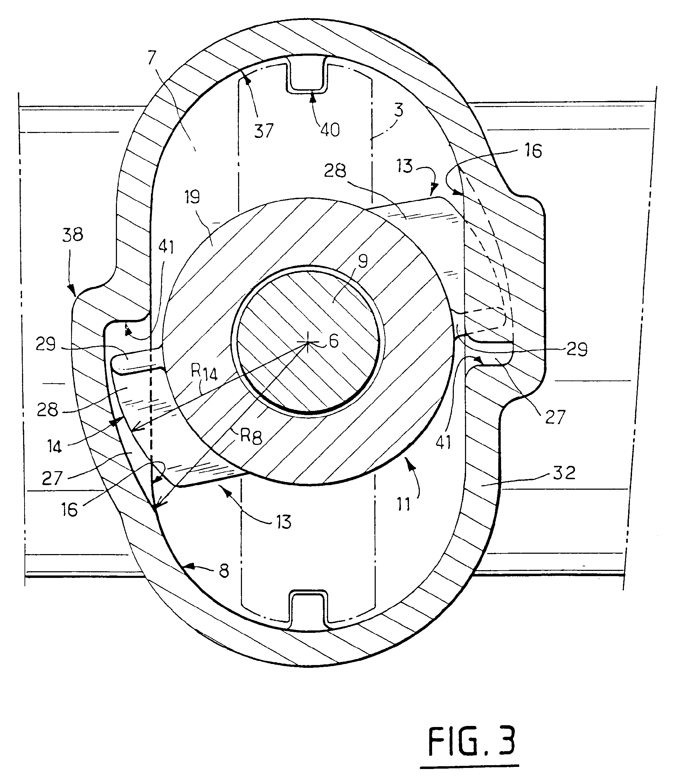

- la figure 3 est une coupe, analogue à la coupe suivant III-III de la figure 1 ; montrant le couvercle d'obturation en cours de montage sur le corps de vanne ; et,

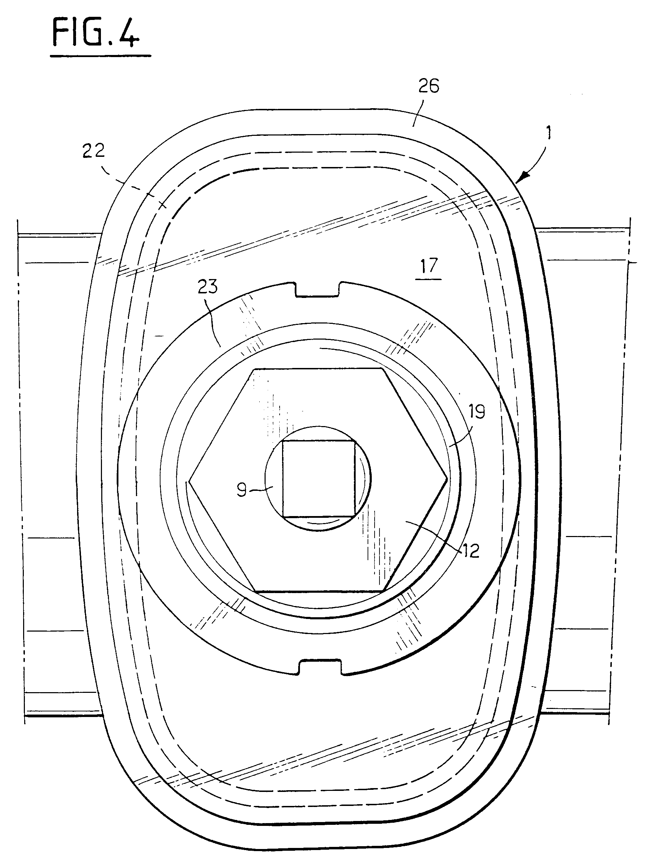

- la figure 4 est une vue suivant flèche F de la figure 2.

Le robinet-vanne représenté sur les figures est disposé sur une conduite 46, en y étant raccordé par boulonnage 138 de ses brides 39 aux tronçons amont et aval de ladite conduite 46.

Ce robinet-vanne comprend :
- un corps de vanne 1 muni d'un siège 2 ;
- un opercule d'obturation 3 susceptible d'être en appui étanche d'obturation sur le siège 2 et recevant dans un logement 4 un écrou prisonnier 5 d'axe 6 ;
- une chambre 7, qui est ménagée dans le corps 1, qui est apte à recevoir ledit opercule 3 dans la configuration d'ouverture du robinet-vanne, et dont la face intérieure 37 est munie de deux glissières 40 de guidage du coulissement, à l'intérieur de ladite chambre 7, de l'opercule d'oburation 4, ladite face intérieure 37 étant cylindrique de section transversale droite ovale ;
- une ouverture 8 de ladite chambre 7 qui permet le passage d'une tige filetée 9 coopérant avec l'écrou prisonnier 5 et comportant une bride de montage 10, la section transversale droite de ladite ouverture 8 étant identique à et dans le prolongement de celle de la face intérieure 37 ;
- un couvercle 11 d'obturation de ladite ouverture 8 qui coopère au maintien axial de la tige filetée 9, ainsi qu'au montage à rotation de ladite tige autour dudit axe 6 ; et
- un presse-étoupe 12 qui réalise l'étanchéité du passage de la tige filetée 9 à travers le couvercle 11.

Dans la réalisation représentée, les dispositions suivantes peuvent être observées :
- le couvercle 11 est muni de deux appendices 13 qui s'étendent radialement, lesdits appendices étant espacés angulairement de manière régulière (diamétralement opposés) ;
- le corps de vanne 1 comporte, dans la zone de l'ouverture 8, deux logements d'appendices symétriques par rapport à l'axe 6, chaque logement étant constitué par une alvéole borgne 27 susceptible de recevoir l'un des appendices 13 en un montage du type "à baïonnette" ;
- une plaque supérieure 17, distincte du corps de vanne, présente, d'une part, un alésage 18 traversé par la partie externe 19 du couvercle 11, d'autre part, une face 21, transversale par rapport à l'axe 6 dudit alésage, apte à être en appui sur la face externe 26 du corps de vanne délimitant l'ouverture 8 dudit corps de vanne ;
- un écrou 23 coopère avec un filetage 24, dont est munie la partie externe 19 du couvercle, de manière à mettre en appui, d'une part, les appendices 13 sur les parois transversales supérieures 25 délimitant les alvéoles 27, d'autre part, la plaque supérieure 17 sur la face transversale externe 26 délimitant l'ouverture 8 du corps de vanne.

Des joints d'étanchéité 20, 22 sont disposés, d'une part, le joint 20, entre la plaque supérieure 17 et le couvercle 11, d'autre part, le joint 22, entre la plaque supérieure 17 et la face transversale externe 26 du corps de vanne.

Par ailleurs, les alvéoles borgnes 27 s'étendent radialement vers l'extérieur du corps de vanne, les parois les délimitant ne chevauchant par la face intérieure 37 à section constante de la paroi 32 délimitant la chambre 7, l'ouverture 8 de cette chambre 7 ne provoquant aucun rétrécissement de la section de ladite chambre 7. Les alvéoles borgnes 27 sont réalisées dans des excroissances 38 de la paroi 32 délimitant la chambre 7, excroissances qui s'étendent radialement vers l'extérieur du corps de vanne.

La distance radiale R14 entre l'axe 6 du couvercle 11 et la périphérie externe 14 d'un appendice 13 est inférieure à la distance radiale R8 entre l'axe central 6 de la face interne de la paroi de l'ouverture 8 dans la zone d'introduction des appendices 13 à l'intérieur des alvéoles 27 et ladite face interne, afin de permettre l'introduction de présentation des appendices 13 en regard des ouvertures 16 desdites alvéoles borgnes 27.

Chaque appendice est constitué par une plaque plane 28, solidaire du couvercle 11 et s'étendant sensiblement transversalement par rapport à l'axe 6 du couvercle, et par un raidisseur 29 solidaire du couvercle 11 et de la plaque plane 28 et s'étendant sensiblement parallèlement à l'axe 6. L'alvéole 27 est elle-même étagée pour recevoir cette plaque plane 28 et ce raidisseur 29, la hauteur H27 de la partie de l'alvéole destinée à recevoir le raidisseur 29 étant telle qu'après serrage de l'écrou 23 sur le filetage 24 de la partie externe 19 du couvercle 11, les plaques planes 28 des divers appendices sont en appui sur les parois transversales 25 des alvéoles, alors que les raidisseurs 29 restent hors d'appui desdites parois transversales 25.

A noter que chaque raidisseur 29, qui a, de par sa disposition, la fonction de renforcer l'attache de la plaque transversale 28, adjacente au corps du couvercle 11, a une autre fonction : celle de constituer une butée de limitation de la rotation du couvercle 11 après introduction de chaque appendice 13 dans l'alvéole 27 correspondante. A cet effet, les fonds des alvéoles 27 sont délimités par des parois planes 41, parallèles à l'axe 6, verticales dans la réalisation représentée, parois 41 sur lesquelles lesdits raidisseurs 29 sont susceptibles de venir en appui et ainsi de limiter la rotation du couvercle 11 autour de l'axe 6.

La partie externe 19 du couvercle 11 comprend un alésage taraudé 30 qui coopère avec un filetage externe 31 du presse-étoupe 12 pour la fixation du presse-étoupe, des joints d'étanchéité 33 et 34 du presse-étoupe étant disposés, les joints 33, entre la partie extrême de la tige filetée 9 et le presse-étoupe 12, et le joint 34, entre le presse-étoupe 12, dont la partie supérieure est conformée en une bride 42, et la face supérieure 43 du couvercle 11, respectivement.

Enfin, un joint d'étanchéité 15 est disposé entre l'une, 35, des faces de la bride 10 et un lamage 36, dont est muni le couvercle 11. Ce joint d'étanchéité 15 est réalisé en un matériau à faible coefficient de frottement, de manière à réduire le couple de manoeuvre, et, est disposé entre la face 35 de la bride 10, qui est celle des deux faces de la bride qui est la plus éloignée du presse-étoupe 12 et le lamage 36 du couvercle, qui est orienté vers ledit presse-étoupe 12.

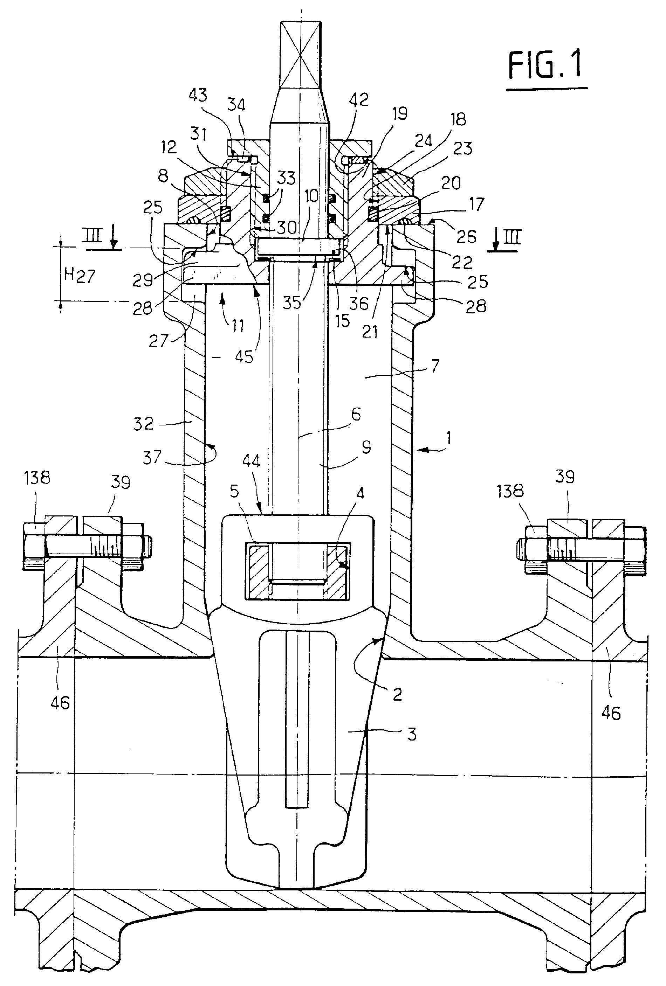

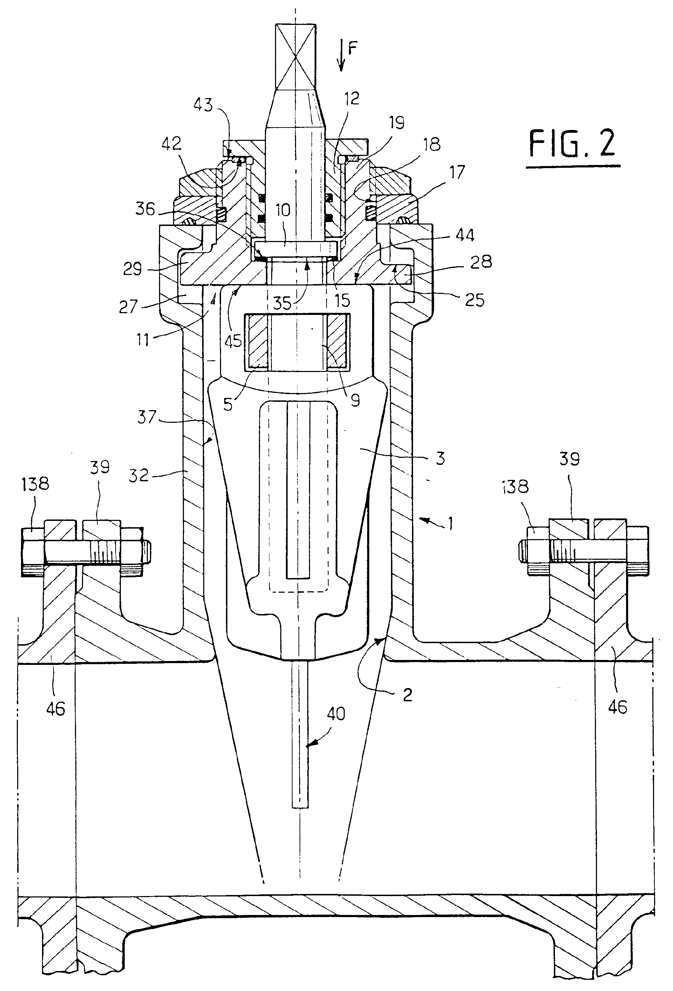

La figure 1 montre la configuration de cette partie du robinet-vanne, dans laquelle est disposé le joint d'étanchéité 15, dans la configuration d'obturation de la conduite 37 par l'opercule d'obturation 3 et plus généralement dans toute configuration autre que celle de la figure 2, celle-ci correspondant à l'ouverture compléte de la conduite 37 et à la mise en appui forcé de la face supérieure 44 du corps de l'opercule d'obturation 3 sur la face inférieure 45 du couvercle 11.

Dans cette configuration de la figure 2, on observe que le joint d'étanchéité 15 est serré et réalise l'étanchéité entre la face 35 de la bride 10 et le lamage 36, et qu'en raison de l'étanchéité par ailleurs réalisée par les joints d'étanchéité 20 et 22, la chambre 7 est isolée de la partie supérieure du robinet-vanne et, notamment, du presse-étoupe 12. Celui-ci peut ainsi éventuellement, si besoin est, être démonté, par exemple dans le but d'en changer les joints d'étanchéité 33 et 34, alors même que la conduite 46 reste apte à véhiculer du fluide, n'étant pas, dans la configuration de la figure 2, obturée par l'opercule d'obturation 3.

Les avantages des dispositions conformes à l'invention vont maintenant être rappelés en faisant référence à la réalisation qui vient d'être décrite.

Tout d'abord, la réalisation représentée comprend la disposition nouvelle de la fixation du couvercle 11 à la partie supérieure du corps de vanne 1, disposition, qui, sans faire appel au boulonnage de la solution connue la plus répandue, évite par ailleurs le rétrécissement de la section de l'ouverture 8 dans la zone de la fixation du couvercle à la partie supérieure du corps de vanne.

Dans ce but, le couvercle est muni d'appendices 13-28-29, qui s'étendent radialement par rapport à l'axe 6 de la chambre 7, et qui coopèrent avec les alvéoles 27 ménagées dans la partie supérieure de la paroi 32 délimitant la chambre 7.

De manière préférée, les alvéoles 27 sont borgnes, s'étendent uniquement vers l'extérieur du corps de vanne, c'est-à-dire au-delà du cylindre défini par la face interne 37 de la paroi 32, vers l'extérieur du corps de vanne, et ne provoquent de ce fait aucun rétrécissement de la section de la chambre 7.

Cette disposition aurait pu être réalisée en ménageant les alvéoles dans l'épaisseur de la paroi 32, si cette épaisseur avait été suffisante pour ce faire.

Il est cependant apparu judicieux de ne pas grever le poids total du robinet-vanne en prévoyant une surépaisseur sur la presque totalité de la hauteur de la paroi 32, uniquement en vue de permettre de réaliser les alvéoles 27 dans l'épaisseur de la partie supérieure. De ce fait, la disposition a été prévue selon laquelle la paroi 32 a des excroissances qui s'étendent vers l'extérieur et dans lesquelles les alvéoles borgnes 27 sont ménagées.

Il convient naturellement de compléter les moyens précités de fixation du couvercle 11, sans obturation complète de la chambre 7, par des moyens d'obturation de ladite chambre 7. Selon l'invention, la plaque supérieure 17 a été prévue et obture de manière étanche l'ouverture 8, en étant assujettie au corps de vanne 1 au moyen de l'écrou 23.

Bien entendu, la présence des joints d'étanchéité 20 et 22 permet de s'affranchir de devoir prévoir des états de surface d'une qualité exceptionnelle permettant l'obtention de l'étanchéité entre la plaque supérieure 17, et, le couvercle 11 et la face 26 du corps de vanne, tout en réalisant l'étanchéité désirée entre la plaque 17 et le couvercle et le corps de vanne.

Les fonctions des plaques planes 28 et des raidisseurs 29 constitutifs des appendices 13 ont déjà été exposées, l'ensemble de ces éléments étant à la fois simple et efficace, apte à permettre une fixation satisfaisante du couvercle 11 sur le corps de vanne.

Il convient aussi de remarquer le montage de la bride 10 entre le presse-étoupe 12 et le couvercle 11 et le choix judicieux de la position du joint d'étanchéité 15, choix qui permet le démontage du presse-étoupe 12 sans interruption de l'alimentation en fluide assurée par la conduite 46. L'entretien du presse-étoupe est facilité par l'adoption de cette disposition particulière.

Il faut finalement observer que, du fait que, d'une part, de manière nouvelle, aucun rétrécissement de la section transversale de la face intérieure 37 de la paroi 32 n'est provoqué par l'ouverture 8, et, d'autre part, l'opercule d'obturation 3 peut remonter à l'intérieur de la chambre 7, il devient possible, sans démontage du corps de vanne 1 par rapport à la conduite 46, par simple démontage des éléments supérieurs du robinet-vanne - presse-étoupe 12, écrou 23, plaque supérieure 17 et couvercle 11 -, de procéder à toutes interventions d'entretien et/ou de réparation de la vis 9 et de l'opercule d'obturation 3, et même de sortir cet ensemble hors de la chambre 7 pour le réparer ou le remplacer par un ensemble neuf. Ceci constitue un avantage également important de la réalisation décrite.

## Revendications

1. Robinet-vanne comprenant :
- un corps de vanne (1) muni d'un siège (2) d'appui d'un opercule d'obturation ;
- un opercule d'obturation (3) susceptible d'être en appui étanche d'obturation sur le siège (2) et recevant dans un logement (4) un écrou prisonnier (5) ;
- une chambre (7), ménagée dans le corps (1), apte à recevoir ledit opercule (3) dans la configuration d'ouverture du robinet-vanne ;
- une ouverture (8) de ladite chambre (7), permettant le passage d'une tige filetée (9) qui coopère avec l'écrou prisonnier (5) et comportant une bride de montage (10) ;
- un couvercle (11) d'obturation de ladite ouverture (8), qui coopère au maintien axial de la tige filetée (9), ainsi qu'au montage à rotation de ladite tige ; et
- un presse-étoupe (12), qui réalise l'étanchéité du passage de la tige filetée (9) à travers le couvercle (11) ;
ledit couvercle (11) étant muni d'au moins deux appendices (13) qui s'étendent radialement, lesdits appendices étant, de préférence, espacés angulairement de manière régulière, solidaires du couvercle (11) et s'étendant sensiblement transversalement par rapport à l'axe (6) du couvercle ;
caractérisé en ce que :
a) chaque appendice est constitué par une plaque plane (28) qui s'étend sensiblement transversalement par rapport à l'axe (6) du couvercle et par un raidisseur (29) solidaire du couvercle (11) et de la plaque plane (28) et s'étendant sensiblement parallèlement à l'axe (6) ;
b) le corps de vanne (1) comporte, dans la zone de ladite ouverture (8), autant de logements d'appendices qu'il y a d'appendices, chaque logement étant constitué par une alvéole borgne (27) susceptible de recevoir l'un desdits appendices (13) en un montage du type "à baïonnette", I'alvéole (27) étant elle-même étagée pour recevoir cette plaque plane (28) et ce raidisseur (29) ;
c) une plaque supérieure (17), distincte du corps de vanne, présente, d'une part, un alésage (18) traversé par la partie externe (19) du couvercle (11), d'autre part, une face (21), transversale par rapport à l'axe (6) dudit alésage, apte à être en appui sur la face externe (26) du corps de vanne délimitant l'ouverture (8) dudit corps de vanne ;
d) un écrou (23) coopère avec un filetage (24), dont est munie ladite partie externe (19) du couvercle, de manière à mettre en appui, d'une part, les appendices (13) sur les parois (25) délimitant les alvéoles (27), d'autre part, la plaque supérieure (17) sur la face transversale externe (26) délimitant l'ouverture (8) du corps de vanne ;
la hauteur (H27) de la partie de l'alvéole destinée à recevoir le raidisseur (29) étant telle qu'après serrage de l'écrou (23) sur le filetage (24) de la partie externe (19) du couvercle (11), les plaques planes (28) des divers appendices sont en appui sur les parois transversales (25) des alvéoles, alors que les raidisseurs (29) restent hors d'appui desdites parois transversales des alvéoles.

2. Robinet-vanne selon la revendication 1, caractérisé en ce que la distance radiale (R14) entre l'axe (6) du couvercle (11) et la périphérie externe (14) d'un appendice (13) est inférieure à la distance radiale (R8) entre l'axe central (6) de la face interne (8) de la paroi du corps de vanne définissant ladite ouverture et ladite face interne (8), afin de permettre l'introduction de présentation des appendices (13) en regard des ouvertures (16) desdites alvéoles borgnes (27).

3. Robinet-vanne selon l'une quelconque des revendications 1 et 2, caractérisé en ce qu'un joint d'étanchéité (15) est disposé entre l'une (35) des faces de la bride (10) et un lamage (36), dont est muni le couvercle (11).

4. Robinet-vanne selon la revendication 3, caractérisé en ce que ledit joint d'étanchéité (15) est disposé entre la face (35) de la bride (10) qui est celle des deux faces de la bride qui est la plus éloignée du presse-étoupe (12) et le lamage (36) du couvercle, qui est orienté vers ledit presse-étoupe (12).

5. Robinet-vanne selon l'une quelconque des revendications 1 à 4, caractérisé en ce que la partie externe (19) du couvercle (11) comprend un alésage taraudé (30) qui coopère avec un filetage externe (31) du presse-étoupe (12) pour la fixation dudit presse-étoupe, des joints d'étanchéité (33 et 34) du presse-étoupe étant disposés entre la partie extrême de la tige filetée (9) et le presse-étoupe (12), et, entre le presse-étoupe (12) et ledit couvercle (11), respectivement.

6. Robinet-vanne selon l'une quelconque des revendications 1 à 5, caractérisé en ce que des joints d'étanchéité (20, 22) sont disposés, d'une part, (20), entre la plaque supérieure (17) et le couvercle (11), d'autre part, (22), entre la plaque supérieure (17) et la face transversale externe (26) du corps de vanne.

7. Robinet-vanne selon l'une quelconque des revendications 1 à 6, caractérisé en ce que les alvéoles borgnes (27) s'étendent radialement vers l'extérieur du corps de vanne, les parois les délimitant ne chevauchant pas la face intérieure (37) sensiblement cylindrique, à section constante, de la paroi (32) délimitant la chambre (7), de sorte que l'ouverture (8) de cette chambre (7) ne provoque aucun rétrécissement de la section de ladite chambre (7).

8. Robinet-vanne selon l'une quelconque des revendications 1 à 7, caractérisé en ce que les alvéoles borgnes (27) sont réalisées dans des excroissances (38) de la paroi (32) délimitant la chambre (7), excroissances qui s'étendent radialement vers l'extérieur du corps de vanne.

## Claims

1. Sliding valve comprising:
- a valve body (1) provided with a seat (2) for abutment of a closure cap;
- a closure cap (3) capable of being in tight obturating abutment on the seat (2) and receiving in a housing (4) a captive nut (5);
- a chamber (7), made in the body (1), adapted to receive said cap (3) in the open configuration of the sliding valve;
- an opening (8) in said chamber (7), allowing passage of a threaded rod (9) which cooperates with the captive nut (5) and comprising a flange (10) for assembly;
- a cover (11) for obturating said opening (8) which cooperates in the axial holding of the threaded rod (9) as well as in the rotational assembly of said rod; and
- a stuffing box (12) which effects seal of the passage of the threaded rod (9) through the cover (11);
said cover (11) being provided with at least two appendices (13) which extend radially, said appendices preferably being spaced apart angularly and regularly, fast with the cover (11) and extending substantially transversely with respect to the axis (6) of the cover;
characterized in that:
a) each appendix is constituted by a plane plate (28) which extends substantially transversely with respect to the axis (6) of the cover and by a stiffener (29) fast with the cover (11) and the plane plate (28) and extending substantially parallel to axis (6);
b) the valve body (1) comprises, in the zone of said opening (8), as many appendix housings as there are appendices, each housing being constituted by a blind recess (27) capable of receiving one of said appendices (13) in a "bayonet" type assembly, the recess (27) itself being stepped to receive this plane plate (28) and this stiffener (29);
c) an upper plate (17), distinct from the valve body, presents, on the one hand, a bore (18) traversed by the outer part (19) of the cover (11), on the other hand, a face (21), transverse with respect to the axis (6) of said bore, adapted to be in abutment on the outer face (26) of the valve body defining the opening (8) of said valve body;
d) a nut (23) cooperates with a threading (24) with which said outer part (19) of the cover is provided, so as to place in abutment, on the one hand, the appendices (13) on the walls (25) defining the recesses (27), on the other hand, the upper plate (17) on the outer transverse face (26) defining the opening (8) of the valve body;
the height (H27) of that part of the recess intended to receive the stiffener (29) being such that, after tightening of the nut (23) on the threading (24) of the outer part (19) of the cover (11), the plane plates (28) of the various appendices are in abutment on the transverse walls (25) of the recesses, whilst the stiffeners (29) remain out of abutment on said transverse walls of the recesses.

2. Sliding valve according to Claim 1, characterized in that the radial distance (R14) between the axis (6) of the cover (11) and the outer periphery (14) of an appendix (13) is less than the radial distance (R8) between the central axis (6) of the inner face (8) of the wall of the valve body defining said opening and said inner face (8), in order to allow introduction for presentation of the appendices (13) opposite the openings (16) in said blind recesses (27).

3. Sliding valve according to either one of Claims 1 and 2, characterized in that an O-ring (15) is disposed between one (35) of the faces of the flange (10) and a counter-sink (36) with which the cover (11) is provided.

4. Sliding valve according to Claim 3, characterized in that said O-ring (15) is disposed between that face (35) of the flange (10) which is that of the two faces of the flange which is most remote from the stuffing box (12) and the counter-sink (36) of the cover, which is oriented towards said stuffing box (12).

5. Sliding valve according to any one of Claims 1 to 4, characterized in that the outer part (19) of the cover (11) comprises a tapped bore (30) which cooperates with an outer thread (31) of the stuffing box (12) for fixation of said stuffing box, O-rings (33 and 34) of the stuffing box being disposed between the end part of the threaded rod (9) and the stuffing box (12) and, between the stuffing box (12) and said cover (11), respectively.

6. Sliding valve according to any one of Claims 1 to 5, characterized in that O-rings (20, 22) are disposed, on the one hand, (20), between the upper plate (17) and the cover (11), on the other hand, (22), between the upper plate (17) and the outer transverse face (26) of the valve body.

7. Sliding valve according to any one of Claims 1 to 6, characterized in that the blind recesses (27) extend radially towards the outside of the valve body, the walls defining them not overlapping the substantially cylindrical inner face (37), of constant section, of the wall (32) defining the chamber (7), with the result that the opening (8) of this chamber (7) provokes no narrowing of the section of said chamber (7).

8. Sliding valve according to any one of Claims 1 to 7, characterized in that the blind recesses (27) are made in protuberances (38) of the wall (32) defining the chamber (7), which protuberances extend radially towards the outside of the valve body.

## Patentansprüche

1. Absperrventil, umfassend:
- einen Ventilkörper (1), der mit einem Sitz (2) zur Auflage einer inneren Verschließeinrichtung versehen ist;
- eine innere Verschließeinrichtung (3), die in dichtverschließender Auflage auf dem Sitz (2) aufliegen kann und in einer Aufnahme (4) eine Einlegemutter (5) aufnimmt;
- eine im Körper (1) vorgesehene Kammer (7) zur Aufnahme der inneren Verschließeinrichtung (3) in der Öffnungskonfiguration des Absperrventils;
- eine Öffnung (8) der Kammer (7) für den Durchtritt einer Gewindestange (9), die mit der Einlegemutter (5) zusammenwirkt und einen Montageflansch (10) aufweist;
- einen Deckel (11) zum Verschließen der Öffnung (8), der zur axialen Halterung der Gewindestange (9) sowie zur drehbaren Anordnung dieser Stange mitwirkt;
- eine Stopfbüchse (12), die die Dichtheit des Durchtritts der Gewindestange (9) durch den Deckel (11) gewährleistet;
wobei der Deckel (11) mit mindestens zwei radial verlaufenden Fortsätzen (13) versehen ist, welche Fortsätze vorzugsweise im Winkel regelmäßig voneinander im Abstand angeordnet sind, mit dem Deckel (11) fest verbunden sind und sich im wesentlichen quer zur Achse (6) des Deckels erstrecken;
dadurch gekennzeichnet, daß:
a) jeder Fortsatz durch eine sich im wesentlichen quer zur Achse (6) des Deckels erstreckende plane Platte (28) und durch eine Versteifungsrippe (29) gebildet ist, die mit dem Deckel (11) und mit der planen Platte (28) fest verbunden ist und sich im wesentlichen parallel zur Achse (6) erstreckt;
b) der Ventilkörper (1) im Bereich der Öffnung (8) so viele Aufnahmen für Fortsätze aufweist wie Fortsätze vorhanden sind, wobei jede Aufnahme durch eine Blindzelle (27) gebildet ist, die einen der Fortsätze (13) in sogenannter "Bajonett"-Anordnung aufnehmen kann, wobei die Zelle (27) selbst zur Aufnahme dieser planen Platte (28) und dieser Versteifungsrippe (29) gestuft ausgebildet ist;
c) eine vom Ventilkörper getrennte obere Platte (17) einerseits eine Bohrung (18), durch die der äußere Teil (19) des Deckels (11) geht, und anderseits eine zur Achse (6) der Bohrung querlaufende Fläche (21), die auf der die Öffnung (8) des Ventilkörpers begrenzenden Außenseite (26) des Ventilkörpers aufliegen kann, aufweist;
d) eine Mutter (23) mit einem Gewinde (24) zusammenwirkt, mit dem der äußere Teil (19) des Deckels versehen ist, sodaß einerseits die Fortsätze (13) auf den die Zellen (27) begrenzenden Wänden (25) und anderseits die obere Platte (17) auf der die Öffnung (8) des Ventilkörpers begrenzenden querlaufenden Außenseite (26) in Anlage gebracht werden;
wobei die Höhe (H27) des zur Aufnahme der Versteifungsrippe (29) bestimmten Teils der Zelle derart ist, daß nach dem Festdrehen der Mutter (23) am Gewinde (24) des äußeren Teils (19) des Deckels (11) die planen Platten (28) der verschiedenen Fortsätze auf den Querwänden (25) der Zellen aufliegen, während die Versteifungsrippen (29) auf diesen Querwänden der Zellen nicht in Auflage kommen.

2. Absperrventil nach Anspruch 1, dadurch gekennzeichnet, daß der radiale Abstand (R14) zwischen der Achse (6) des Deckels (11) und dem Außenumfang (14) eines Fortsatzes (13) kleiner ist als der radiale Abstand (R8) zwischen der Mittelachse (6) der Innenseite (8) der diese Öffnung definierenden Wand des Ventilkörpers und dieser Innenseite (8), um die Einführung zur Positionierung der Fortsätze (13) gegenüber den Öffnungen (16) der Blindzellen (27) zu ermöglichen.

3. Absperrventil nach einem der Ansprüche 1 und 2, dadurch gekennzeichnet, daß eine Dichtungsfuge (15) zwischen einer (35) der Seiten des Flansches (10) und einer Senkung (36), mit der der Deckel (11) versehen ist, angeordnet ist.

4. Absperrventil nach Anspruch 3, dadurch gekennzeichnet, daß die Dichtungsfuge (15) zwischen der Seite (35) des Flansches (10), welche jene der beiden Seiten des Flansches ist, die von der Stopfbüchse (12) weiter entfernt ist, und der Senkung (36) des Deckels, die zur Stopfbüchse (12) gerichtet ist, angeordnet ist.

5. Absperrventil nach einem der Ansprüche 1 bis 4, dadurch gekennzeichnet, daß der äußere Teil (19) des Deckels (11) eine Bohrung (30) mit Innengewinde aufweist, die mit einem Außengewinde (31) der Stopfbüchse (12) zur Befestigung dieser Stopfbüchse zusammenwirkt, wobei Dichtungsfugen (33 und 34) der Stopfbüchse zwischen dem Endteil der Gewindestange (9) und der Stopfbüchse (12) bzw. zwischen der Stopfbüchse (12) und dem Deckel (11) vorgesehen sind.

6. Absperrventil nach einem der Ansprüche 1 bis 5, dadurch gekennzeichnet, daß Dichtungsfugen (20, 22) einerseits (20) zwischen der oberen Platte (17) und dem Deckel (11) und anderseits (22) zwischen der oberen Platte (17) und der querlaufenden Außenseite (26) des Ventilkörpers vorgesehen sind.

7. Absperrventil nach einem der Ansprüche 1 bis 6, dadurch gekennzeichnet, daß sich die Blindzellen (27) radial nach außerhalb des Ventilkörpers erstrecken, wobei die sie begrenzenden Wände die im wesentlichen zylindrische Innenseite (37) mit konstantem Querschnitt der die Kammer (7) begrenzenden Wand (32) nicht überlappen, sodaß die Öffnung (8) dieser Kammer (7) keine Verengung des Querschnitts dieser Kammer (7) bewirkt.

8. Absperrventil nach einem der Ansprüche 1 bis 7, dadurch gekennzeichnet, daß die Blindzellen (27) in Ausbuchtungen (38) der die Kammer (7) begrenzenden Wand (32) ausgeführt sind, welche Ausbuchtungen sich radial nach außerhalb des Ventilkörpers erstrecken.
